(19) **Europäisches Patentamt**

**European Patent Office**

**Office européen des brevets**

(11) Veröffentlichungsnummer: **0 339 183**

**A2**

(12) ## EUROPÄISCHE PATENTANMELDUNG

(21) Anmeldenummer: **89101228.8**

(22) Anmeldetag: **25.01.89**

(51) Int. Cl.⁴: **B22C 1/18 , B22C 9/10 , B29C 33/52**

(30) Priorität: **29.04.88 DE 3814528**

(43) Veröffentlichungstag der Anmeldung:
**02.11.89 Patentblatt 89/44**

(84) Benannte Vertragsstaaten:
**AT BE CH DE ES FR GB IT LI LU NL SE**

(71) Anmelder: **Giulini Chemie GmbH**
**Giulinistrasse 2 Postfach 150 480**
**D-6700 Ludwigshafen/Rhein(DE)**

(72) Erfinder: **Clubbs, Neville Henry**
**Herzogstrasse 25**
**D-6839 Schwetzingen(DE)**
Erfinder: **Kiefer, Ulrich, Dipl.-Ing**
**Seestrasse 58**
**D-6904 Eppelheim(DE)**
Erfinder: **Förster, Hans-Joachim. Dr.**
**Dipl.-Chem.**
**Ahornweg 19**
**D-6830 Schwetzingen(DE)**
Erfinder: **Bluh, Jürgen**
**Uhlandstrasse 14**
**D-6704 Ludwigshafen(DE)**

(54) **Neue, zur Herstellung von mit Wasser auswaschbaren Kernen und Formen geeignete keramische Mischungen.**

(57) Neue, zur Herstellung von mit Wasser auswaschbaren Kernen und Formen geeignete keramische Mischungen, bestehend aus
30 - 80 Gew.% alpha-und/oder beta-Calciumsulfathalbhydrat
5 - 45 Gew.% Schamotte und
5 - 25 Gew.% Füllstoff auf Silikatbasis.

EP 0 339 183 A2

**Neue, zur Herstellung von mit Wasser auswaschbaren Kernen und Formen geeignete keramische Mischungen**

Gegenstand der vorliegenden Erfindung sind neue, zur Herstellung von mit Wasser auswaschbaren Kernen und Formen geeignete Mischungen auf Basis von Calciumsulfat-Halbhydrat sowie ein Verfahren zur Herstellung dieser Kerne und Formen. Auch ist Gegenstand der Erfindung die Verwendung der Kerne und Formen zur Herstellung von Form- und Bauteilen aus Verbundwerkstoffen, Thermoplasten, Duroplasten, Elastomeren und niedrig schmelzenden Metall-Legierungen.

Materialien, zur Herstellung von auswaschbaren Formen, insbesondere Kernen, sind schon seit langem bekannt. So werden beispielsweise eutektische Gemische angeboten, deren Schmelztemperatur unterhalb 300 Grad C, insbesondere unterhalb 150 Grad C liegt. Sie müssen nach dem Aufschmelzen in komplizierten, mit Rührern ausgestatteten Schmelzbehältern in Gießformen zur Herstellung von Kernen, Wickeldornen u. a. gegossen werden. Da die eutektischen Gemische außerdem feuchtigkeitsempfindlich sind, sind neben teuren Schmelzeinrichtungen, auf wendigen Mischgeräten und Trockenhalteeinrichtungen zusätzliche Schutzmaßnahmen erforderlich.

Zur Herstellung von verlorenen Kernen oder Formen werden weiterhin niedrig schmelzende Metall-Legierungen angeboten, die z. B. heiß ausschmelzbar sind und daher ebenfalls für solche Formen und Kerne geeignet sind, die zur Herstellung von komplizierten, z. B. intern hinterschnittenen Bau- und Formteilen, benötigt werden.

Kostspielige Schmelz- und Gießereiausrüstungen sowie temperaturbeständige Formen sind jedoch auch bei diesem Verfahren erforderlich.

Für viele Zwecke nicht geeignet ist schließlich auch noch das Wachsausschmelzverfahren.

Naturgips wird zwar ebenfalls zur Herstellung von Kernen und Formen eingesetzt, jedoch müssen diese mit Hammer und Meißel aus dem Bauteil herausgehauen werden, da der Naturgips weder mit kaltem noch heißem Wasser auswaschbar ist.

Es stellte sich somit die Aufgabe, ein Material zu finden, das zur Herstellung von mit Wasser auswaschbaren Kernen und Formen geeignet ist und bei dessen Verarbeitung kostspielige Schmelzeinrichtungen, aufwendige Mischgeräte und Gießereivorrichtungen nicht erforderlich sind.

Überraschenderweise hat sich nunmehr gezeigt, daß die gestellte Aufgabe mit einem Material, bestehend aus 30 bis 80 Gew.% alpha-und/oder beta-Calciumsulfathalbhydrat, 5 bis 45 Gew.% Schamotte und 5 bis 25 Gew.% Füllstoff auf Silikatbasis gelöst werden kann. Vorzugsweise werden keramische Mischungen eingesetzt, die aus 40 bis 50 Gew.% alpha und/oder beta-Calciumsulfat-Halbhydrat, 35 bis 40 Gew.% Schamotte und 15 bis 20 Gew.% Füllstoff auf Silikatbasis bestehen.

Besonders geeignete Füllstoffe auf Silikatbasis sind Talkum, Bentonite und Kaoline. Es können jedoch auch andere Silikate eingesetzt werden. Wesentlich ist, daß die Füllstoffe unter Aufnahme von Wasser quellen und damit raschen Zerfall der Formen und Kerne im Waschprozeß herbeiführen.

Zur Herstellung der mit Wasser auswaschbaren Formen und Kerne werden jeweils 100 Gewichtsteile der keramischen pulverförmigen Mischung in 46 bis 54 Gewichtsteile Wasser, insbesondere 47 bis 50 Gewichtsteile Wasser, eingerührt. Anschließend wird der gebildete Brei in an sich bekannter Weise zu Kernen und Formen verarbeitet, die nach erfolgter Abbindung entformt und getrocknet werden. Vor dem Auswaschen aus den erzeugten Form- und Bauteilen werden die Form- und Bauteile mit den Kernen und Formen 2 Stunden auf mindestens 125 Grad C, vorzugsweise mindestens 150 Grad C erhitzt werden. Die Erhitzung auf mindestens 125, bzw. 150 Grad ist unabdingbares Verfahrensmerkmal der Erfindung. Entfällt das Erhitzen, erhält man Formen und Kerne, die weder mit kaltem noch mit heißem Wasser auswaschbar sind.

Erwähnenswert ist an dieser Stelle, daß der Zeitpunkt des Erhitzens auf mindestens 125 bzw. mindestens 150 Grad C bei dem neuen Verfahren nicht kritisch ist. Das Erhitzen kann sowohl von der Verwendung der Kerne und Formen zur Herstellung von Form- und Bauteilen aus Faserverbundwerkstoffen nach dem Prepreg-Verfahren, Naßlaminat-Verfahren oder Wickel-Verfahren erfolgen als auch nachher. Auch wenn die Kerne und Formen zur Herstellung von Form- und Bauteilen aus Kunststoffen oder niedrig schmelzenden Metal-Legierungen eingesetzt werden, kann das Erhitzen vor, während oder nach der Herstellung der Form- und Bauteilen erfolgen, vorausgesetzt daß Kunststoffe und Metall-Legierungen im Temperaturbereich von 125 bzw. 150 Grad C beständig sind.

Als besonders geeignete Korngrößen der Mischungskomponenten Calciumsulfat-Halbhydrat resp. Füllstoff haben sich mittlere Korngrößen von 10 - 50 um, insbesondere 15 bis 25 um, erwiesen, jedoch können die mittleren Korngrößen auch außerhalb dieser Bereiche liegen. Die Korngrößenverteilung der Schamotteteilchen liegt bei größer Null bis 500 um.

Anhand der nachstehenden beispiele wird der Erfindungsgegenstand noch näher erläutert:

Beispiel 1 (Vergleichsversuch)

500 g alpha-Calciumsulfat-Halbhydrat mit einer mittleren Korngröße von ca. 15 um, 350 g Schamotte mit einer Korngröße größer 0 bis 500 um und 150 g Talkum mit einer mittleren Korngröße von ca. 20 um werden in einem Taumelmischer 10 Minuten gemischt.

Die Mischung wird anschließend mit 500 ml Wasser intensiv vermischt und der daraus resultierende Brei in einen Behälter gegossen. Die Schichtdicke im Behälter liegt bei etwa 1 cm.

1 Stunde nach dem Guß wird der gebildete Körper entformt und 12 Stunden bei 45 Grad C getrocknet. Nach dem Trocknen wird der Körper gewogen und dann 24 Stunden in Wasser getaucht, anschließend nochmals 12 Stunden bei 45 Grad C getrocknet und wieder gewogen. Dabei stellte sich heraus, daß der Körper nur 1 % an gewicht nach einem 24 Stunden-Tauchvorgang verloren hat.

Beispiel 2

Wird der im Beispiel 1 gebildete Körper 2 Stunden auf 150 Grad C erhitzt und nach Abkühlung auf Raumtemperatur erneut in Wasser getaucht, stellt man fest, daß der Körper sofort nach dem Untertauchen unter Gasblasenentwicklung aufquillt. Nach 2 Stunden ist die Außenkontur kaum mehr erkennbar. nach 12 Stunden ist der Körper völlig zerfallen.

Beispiel 3

500 g beta-Calciumsulfat-Halbhydrat mit einer mittleren Korngröße von ca. 25 um, 350 g Schamotte mit einer Korngröße größer 0 bis 500 um und 150 g Talkum mit einer mittleren Korngröße von ca. 20 um werden in einem Taumelmischer 10 Minuten homogen vermischt. Diese Mischung wird wie in den Beispielen 1 und 2 weiter verarbeitet. Die gebildeten Körper ergeben bei Prüfung in Wasser praktisch die gleichen Ergebnisse.

Beispiel 4

450 g alpha- Calciumsulfat-Halbhydrat mit einer mittleren Korngröße von ca.18 um wurden mit 400 g Schamotte mit einer Korngröße größer Null bis 500 und 150 g Kaolin mit einer mittleren Korngröße von ca. 25 um in einem Taumelmischer 10 Minuten gemischt.

Die Mischung wurde anschließend mit 450 g Wasser intensiv vermischt und der daraus resultierende Brei in einen Behälter gegossen. Die Schichtdicke im Behälter betrug 1 cm.

Nach einer Abbindezeit von 1 Stunde wird der gebildete Körper entformt und 24 Stunden bei 40 Grad C getrocknet. Anschließend wird der Formkörper 2 Stunden auf 140 Grad C erhitzt und nach Abkühlung auf Raumtemperatur in Wasser getaucht. Sofort nach dem Eintauchen quillt der Formkörper unter Gasblasenentwicklung auf. Nach etwa 2 Stunden ist die Außenkontur kaum mehr erkennbar. Nach 12 Stunden ist der Körper völlig zerfallen.

Beispiel 5

Es wird ein Formkörper wie im Beispiel 4 hergestellt. Anstelle von Kaolin wird jedoch Kalcium-Bentonit eingesetzt. Auch hier beobachtet man nach dem Eintauchen des Formkörpers in Wasser eine Aufquellung unter Gasblasenentwicklung. Nach 11 Stunden ist der Körper völlig zerfallen.

**Ansprüche**

1. Neue, zur Herstellung von mit Wasser auswaschbaren Kernen und Formen geeignete keramische Mischungen, bestehend aus

30 - 80 Gew.% alpha-und/oder beta-Calciumsulfathalbhydrat

5 - 45 Gew.% Schamotte und

5 - 25 Gew.% Füllstoff auf Silikatbasis

2. Keramische Mischungen nach Anspruch 1, bestehend aus

40 - 50 Gew.% alpha- und/oder beta-Calciumsulfathalbhydrat

35 - 40 Gew.% Schamotte und

15 -20 Gew.% Füllstoff auf Silikatbasis.

3. Keramische Mischungen nach den Ansprüchen 1 und 2, dadurch gekennzeichnet, daß der Füllstoff aus Talkum besteht.

4. Keramische Mischungen nach den Ansprüchen 1 und 2, dadurch gekennzeichnet, daß der Füllstoff aus Bentonit besteht.

5. Keramische Mischungen nach den Ansprüchen 1 und 2, dadurch gekennzeichnet, daß der Füllstoff aus Kaolin besteht.

6. Verfahren zur Herstellung von mit Wasser auswaschbaren Kernen und Formen aus den Mischungen nach den Ansprüchen 1 bis 6, dadurch gekennzeichnet, daß 100 Gewichtsteile der Mischung in Pulverform unter Rühren in 46 bis 54 Gewichtsteile Wasser, insbesondere 47 bis 50 Gewichtsteile, eingetragen werden, der gebildete Brei in an sich bekannter Weise zu Kernen und Formen verarbeitet wird, die nach erfolgter Abbindung entformt und getrocknet werden.

7. Verfahren nach Anspruch 6, dadurch gekennzeichnet, daß die Kerne und Formen bei einer Temperatur von mindestens 45 Grad C getrocknet werden.

8. Verwendung der nach den Anspruch 6 und 7 hergestellten Kerne und Formen zur Herstellung von Form- und Bauteilen aus Verbundwerkstoffen nach dem Prepreg-Verfahren, Naßlaminat-Verfahren oder Wickel-Verfahren, dadurch gekennzeichnet, daß die Formen und Kerne vor dem Auswaschen aus den erzeugten Form- und Bauteilen 2 Stunden auf mindestens 125 Grad C, vorzugsweise mindestens 150 Grad C, erhitzt werden.

9. Verwendung der nach den Ansprüchen 6 und 7 hergestellten Kerne und Formen zur Herstellung von Form- und Bauteilen aus niederschmelzenden Metall-Legierungen im Gießverfahren, dadurch gekennzeichnet, daß die Formen und Kerne vor dem Auswaschen aus den erzeugten Form- und Bauteilen 2 Stunden auf mindestens 125 Grad C, vorzugsweise mindestens 150 Grad C, erhitzt werden.

10. Verwendung der nach den Ansprüchen 6 und 7 hergestellten Kerne und Formen zur Herstellung von Form- und Bauteilen aus Kunststoff im Gieß- oder Spritzverfahren, dadurch gekennzeichnet, daß die Formen und Kerne vor dem Auswaschen aus den erzeugten Form- und Bauteilen 2 Stunden auf mindestens 125 Grad C, vorzugsweise mindestens 150 Grad C, erhitzt werden.